# EUROPEAN PATENT APPLICATION

(11) **EP 3 875 949 A1**
(43) Date of publication of application: **08.09.2021**
(21) Application number: 19878656.8
(22) Date of filing: 07.10.2019
(51) Int. Cl.: G01N 27/28, G01N 27/416

(54) **DETECTION DEVICE**

(30) Priority: 29.10.2018 JP 2018202568
(71) Applicant: YOKOWO CO., LTD., Kita-ku Tokyo 114-8515 (JP)
(72) Inventor: MIYAGAWA Kouta, Tokyo 114-8515 (JP)
(74) Representative: Sibley, Lara Ann
(86) International application number: PCT/JP2019/039442
(87) International publication number: WO 2020/090354

(57) **Abstract**

According to the present invention, a wiring substrate (100) has a first terminal (112) and a second terminal (114). The second terminal (114) is electrically connected to the first terminal (112). A chip (200) has a working electrode (222) and a terminal (224). The terminal (224) is electrically connected to the working electrode (222). An electronic element (300) has a current-voltage conversion circuit (310) and a terminal (312). The terminal (312) is electrically connected to the current-voltage conversion circuit (310). The chip (200) overlaps with the wiring substrate (100). The terminal (224) of the chip (200) is electrically connected to the first terminal (112) of the wiring substrate (100). The electronic element (300) overlaps with the wiring substrate (100). The terminal (312) of the electronic element (300) is electrically connected to the second terminal (114) of the wiring substrate (100).

## Description

### FIELD

The present invention relates to a detection device.

### BACKGROUND

Potentiostats are sometimes used for electrochemical measurements using a working electrode, a reference electrode, and a counter electrode. Potentiostats control the potential of the working electrode relative to the potential of the reference electrode to measure the current generated in the working electrode (redox current).

Patent Literature 1 describes an example of electrochemical measurement using a potentiostat. The system used in this example includes a potentiostat and a three-electrode cell including a working electrode, a reference electrode, and a counter electrode. The potentiostat is electronically coupled to a user interface disposed outside the three-electrode cell.

Patent Literature 2 describes an example of electrolytic refining of silicon using a system having an anode, a cathode, a reference electrode, an electrolytic solution, and a control unit. The anode includes a silicon-containing compound. The control unit has a potentiostat. The potentiostat controls the voltage between the anode and the reference electrode, causing the silicon in the anode to dissolve from the anode into the electrolyte. The control unit controls the current between the anode and the cathode to precipitate silicon in the electrolytic solution from the electrolytic solution to the cathode.

### [CITATION LIST]

### [PATENT LITERATURE]

[PTL 1] WO 2018/096404 A1
[PTL 2] WO 2014/004610 A1

### SUMMARY

### [TECHNICAL PROBLEM]

The present inventors have examined the detection of minute redox current at low noise. For example, when the working electrode, the reference electrode, and the counter electrode are electrically connected to the potentiostat via a cable, the cable is susceptible to noise, whereby it becomes difficult to detect minute redox current.

An example of an object of the present invention is to detect low-noise minute redox current. Other objects of the present invention will become apparent from the descriptions herein.

### [SOLUTION TO PROBLEM]

One aspect of the present invention provides:
a detection device, comprising:
   a wiring substrate having a first terminal and a second terminal electrically connected to the first terminal;
   a chip having a working electrode and a terminal electrically connected to the working electrode; and
   an electronic element having a current-voltage conversion circuit and a terminal electrically connected to the current-voltage conversion circuit, wherein
   the chip overlaps with the wiring substrate,
   the terminal of the chip is electrically connected to the first terminal of the wiring substrate,
   the electronic element overlaps with the wiring substrate, and
   the terminal of the electronic element is electrically connected to the second terminal of the wiring substrate.

Another aspect of the present invention provides:
a detection device, comprising:
a holder which holds an op amp;
a first terminal which projects from the holder and which is electrically connected to an inverted input terminal of the op amp; and
a reference electrode which is attached to the first terminal and which is electrically connected to the first terminal.

Yet other aspect of the present invention provides:
a detection device, comprising:
a holder which holds an op amp;
a terminal which projects from the holder and which is electrically connected to an output terminal of the op amp; and
a counter electrode which is attached to the terminal and which is electrically connected to the terminal.

### [ADVANTAGEOUS EFFECTS OF INVENTION]

According to the aspect of the present invention described above, low-noise minute redox current can be detected.

### BRIEF DESCRIPTION OF DRAWINGS

FIG. 1 is a perspective view of a measurement device according to an embodiment.
FIG. 2 is a cross-sectional view along A-A' of FIG. 1.
FIG. 3 is a plan view of a chip shown in FIG. 2.
FIG. 4 is an enlarged view of a portion of FIG. 3.
FIG. 5 is a cross-sectional view along B-B' of FIG. 4.
FIG. 6 is a circuit diagram of an example of the measurement device shown in FIG. 1.

### DESCRIPTION OF EMBODIMENTS

The embodiments of the present invention will be described below using the drawings. In the drawings, identical constituent elements are assigned the same reference sign, and descriptions thereof have been appropriately omitted.

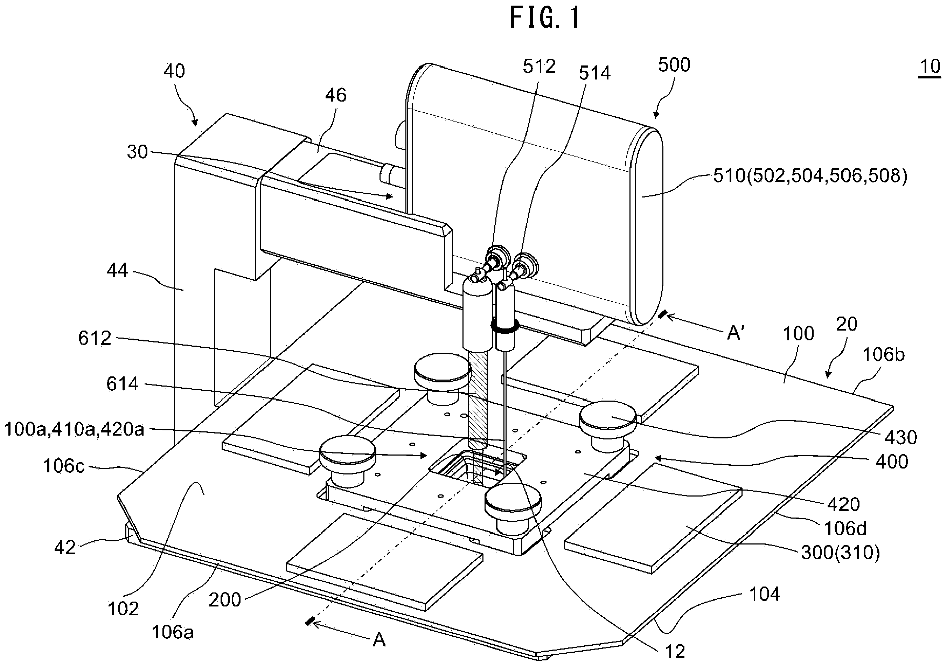

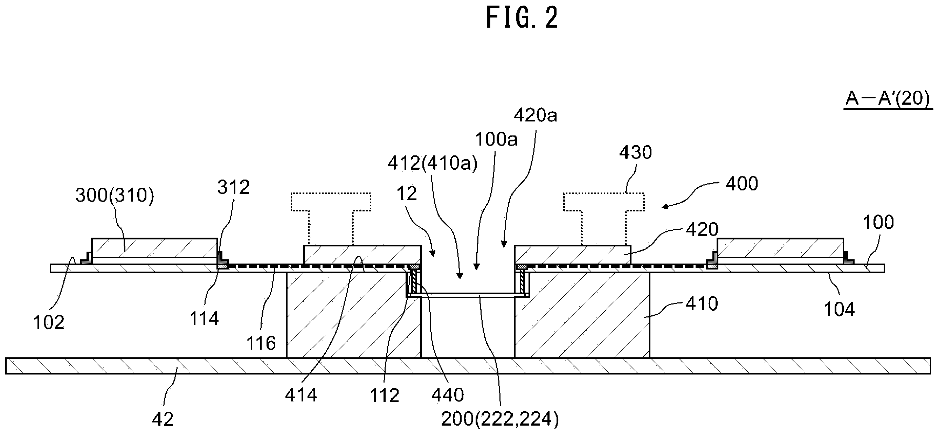

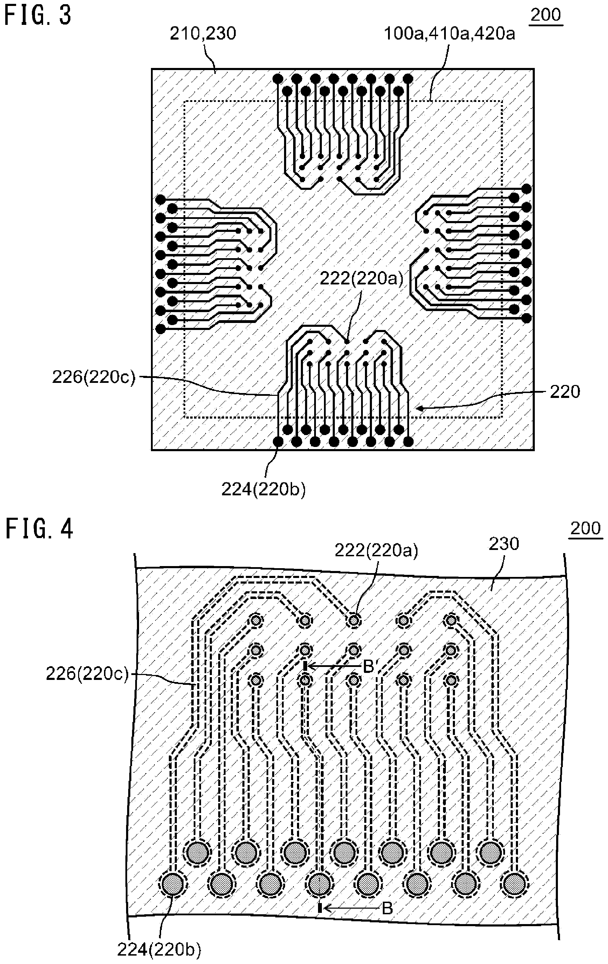

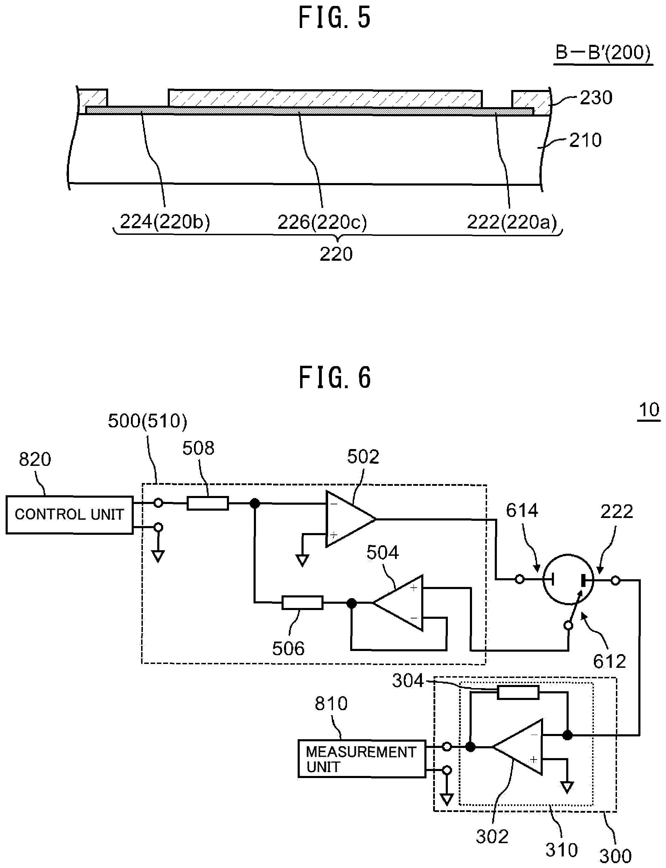

FIG. 1 is a perspective view of a measurement device 10 according to an embodiment. FIG. 2 is a cross-sectional view along A-A' of FIG. 1. FIG. 3 is a plan view of a chip 200 shown in FIG. 2. FIG. 4 is an enlarged view of a portion of FIG. 3. FIG. 5 is a cross-sectional view along B-B' of FIG. 4. FIG. 6 is a circuit diagram of an example of the measurement device 10 shown in FIG. 1. In FIG. 1, the wiring 116 of the wiring substrate 100 and terminals 312 of an electronic element 300 (FIG. 2) are not shown.

As shown in FIG. 1, the measurement device 10 includes a detection device 20, a detection device 30, and a stand 40.

As shown in FIGS. 1 and 2, the detection device 20 includes a wiring substrate 100, a chip 200, electronic elements 300, and a fixing member 400.

As shown in FIG. 1, the detection device 30 includes an electronic device 500, a reference electrode 612, and a counter electrode 614.

As shown in FIG. 1, the electronic device 500 is supported by the stand 40 at a position higher than the detection device 20, for example, the electronic device 500 is supported by the stand 40 above the detection device 20. As shown in FIGS. 1 and 2, the stand 40 has a stage 42, a support column 44, and an arm 46. The detection device 20 is mounted on the stage 42 of the stand 40. The arm 46 is attached to the stage 42 via the support column 44. The electronic device 500 is attached to the arm 46.

An overview of the detection device 20 will be described using FIG. 2. The detection device 20 includes the wiring substrate 100, the chip 200, and the electronic elements 300. The wiring substrate 100 has a first terminal 112 and a second terminal 114. The second terminal 114 is electrically connected to the first terminal 112. The chip 200 overlaps with the wiring substrate 100, and has a working electrode 222 and a terminal 224 (the details of the working electrode 222 and the terminal 224 will be described later using FIGS. 3 to 5). The terminal 224 is electrically connected to the first terminal 112 of the wiring substrate 100, and is electrically connected to the working electrode 222. The electronic element 300 overlaps with the wiring substrate 100, and has a current-voltage conversion circuit 310 and a terminal 312. The terminal 312 is electrically connected to the second terminal 114 of the wiring substrate 100, and is electrically connected to the current-voltage conversion circuit 310.

According to the above-described configuration, low-noise minute redox current can be detected. Specifically, in the configuration described above, the working electrode 222 is electrically connected to the current-voltage conversion circuit 310 via the wiring substrate 100. Therefore, the physical distance from the working electrode 222 to the current-voltage conversion circuit 310 can be shortened. Thus, in the electrical path from the working electrode 222 to the current-voltage conversion circuit 310, the influence of noise can be reduced. Therefore, low-noise minute redox current can be detected.

An overview of the detection device 30 will be described using FIG. 1. The detection device 30 includes a holder 510, a terminal 512, a terminal 514, a reference electrode 612, and a counter electrode 614. The holder 510 holds an op amp 502 (the details of the op amp 502 will be described later using FIG. 6). The terminal 512 projects from the holder 510, and is electrically connected to the inverted input terminal of the op amp 502. The terminal 514 projects from the holder 510, and is electrically connected to the output terminal of the op amp 502. The reference electrode 612 is attached to the terminal 512 and is electrically connected to the terminal 512. The counter electrode 614 is attached to the terminal 514 and is electrically connected to the terminal 514.

According to the above-described configuration, low-noise minute redox current can be detected. Specifically, in the above-described configuration, the reference electrode 612 is electrically connected to the op amp 502 via the holder 510. Therefore, the physical distance from the reference electrode 612 to the op amp 502 can be shortened. Thus, in the electrical path from the reference electrode 612 to the op amp 502, the influence of noise can be reduced. Further, in the above-described configuration, the counter electrode 614 is electrically connected to the op amp 502 via the holder 510. Therefore, the physical distance from the counter-electrode 614 to the op amp 502 can be shortened. Therefore, in the electrical path from the counter electrode 614 to the op amp 502, the influence of noise can be reduced. In this way, low-noise minute redox current can be detected.

Though both the reference electrode 612 and the counter electrode 614 are electrically connected to the op amp 502 via the holder 510 in the example shown in FIG. 1, only one of the reference electrode 612 and the counter electrode 614 may be electrically connected to the op amp 502 via the holder 510. In this case, the other of the reference electrode 612 and the counter electrode 614 may be connected to the op amp 502 via a member different from the holder 510 (for example, a cable). Even in this case, as in the example shown in FIG.1, low-noise minute redox current can be detected.

Though the detection device 20 has the above-described configuration, the detection device 30 need not have the above-described configuration. For example, both the reference electrode 612 and the counter electrode 614 may be connected to the op amp 502 via members different from the holder 510 (for example, cables).

Among the working electrode, the reference electrode, and the counter electrode, the noise reduction brought about by the above-described configuration is most remarkable in the working electrode. Even if the above-described configuration is not adopted for the reference electrode and the counter electrode, and the above-described configuration is adopted for the working electrode, low-noise minute redox current can similarly be detected.

The details of the measurement device 10 will be described using FIGS. 1 and 2.

The wiring substrate 100 has a first surface 102, a second surface 104, a first side 106a, a second side 106b, a third side 106c, and a fourth side 106d. The second surface 104 is the surface opposite to the first surface 102. The second side 106b is the side opposite to the first side 106a (the side facing to the first side 106a). The third side 106c is the side between the first side 106a and the second side 106b. The fourth side 106d is the side opposite to the third side 106c (the side facing to the third side 106c).

The wiring substrate 100 is, for example, a printed wiring board (PWB). The wiring substrate 100 includes the first terminal 112, the second terminal 114, and the wiring 116. The wiring 116 electrically connects the first terminal 112 and the second terminal 114 to each other. In the example shown in FIG. 2, the first terminal 112, the second terminal 114, and the wiring 116 are positioned on the side of the first surface 102 of the wiring substrate 100. The first terminal 112, the second terminal 114, and the wiring 116 may be positioned on the side of the second surface 104 of the wiring substrate 100, or may be positioned between the first surface 102 and the second surface 104 of the wiring substrate 100.

The wiring substrate 100 has an aperture 100a. The aperture 100a of the wiring substrate 100 overlaps with an aperture 410a (the details of which will be described later) of a base material 410 and an aperture 420a (the details of which will be described later) of a base material 420.

The electronic element 300 is, for example, an integrated circuit (IC) chip.

In the example shown in FIG. 1, a plurality of electronic elements 300 are mounted on the wiring substrate 100, and the four electronic elements 300 are arranged along the four sides (the first side 106a, the second side 106b, the third side 106c, and the fourth side 106d) of the wiring substrate 100, respectively. However, the layout of the plurality of electronic elements 300 is not limited to the example shown in FIG. 1. For example, the number of electronic elements 300 arranged along each side of the wiring substrate 100 may differ depending on each side of the wiring substrate 100. Further, an electronic element 300 need not be disposed on at least one side of the four sides of the wiring substrate 100.

Though the electronic element 300 is positioned on the side of the first surface 102 of the wiring substrate 100 in the example shown in FIG. 2, it may be positioned on the side of the second surface 104 of the wiring substrate 100.

In the example shown in FIG. 2, the terminal 312 of the electronic element 300 is a lead, and is bonded to the second terminal 114 of the wiring substrate 100 with a bonding material (for example, solder). The terminal 312 of the electronic element 300 may be a bump.

The fixing member 400 has the base material 410, the base material 420, and stoppers 430. The fixing member 400 secures the wiring substrate 100, and specifically, has a first region 412 and a second region 414. The first region 412 has the aperture 410a. The second region 414 surrounds the first region 412. The wiring substrate 100 is positioned on the second region 414 of the base material 410 such that the aperture 100a of the wiring substrate 100 overlaps with the aperture 410a of the base material 410. The base material 420 is positioned on the first surface 102 of the wiring substrate 100 and is secured to the base material 410 by the stoppers 430. In the example shown in FIG. 1, the stoppers 430 can be screwed into the base material 410, and by screwing the stopper 430, the base material 420 can be pressed against the base material 410. In this way, the wiring substrate 100 can be secured by the fixing member 400.

The chip 200 is positioned in the aperture 410a of the base material 410. In the example shown in FIG. 2, the detection device 20 includes a connector 440. The connector 440 is, for example, pins. The connector 440 is positioned between the wiring substrate 100 and the chip 200. The first terminal 112 of the wiring substrate 100 and the terminal 224 of the chip 200 are electrically connected to each other via the connector 440 (the details of the terminal 224 will be described later using FIGS. 3 to 5).

As shown in FIGS. 1 and 2, a cavity (cavity 12) is defined by the aperture 100a of the wiring substrate 100, the chip 200, the aperture 410a of the base material 410, and the aperture 420a of the base material 420. An electrochemical cell can be formed by the cavity 12.

The electronic device 500 includes an op amp 502, an op amp 504, a resistor 506, a resistor 508, the terminal 512, and the terminal 514. The holder 510 holds the op amp 502, the op amp 504, the resistor 506, and the resistor 508. In the example shown in FIG. 1, the holder 510 is a housing which houses the op amp 502, the op amp 504, the resistor 506, and the resistor 508. The terminals 512 and 514 project from the housing (holder 510).

In the example shown in FIG. 1, the electronic device 500 is disposed directly above the cavity 12 by the arm 46 of the stand 40. Thus, at least a portion of the reference electrode 612 (in the example shown in FIG. 1, the tip of the reference electrode 612) and at least a portion of the counter electrode 614 (in the example shown in FIG. 1, the tip of the counter electrode 614) can be inserted into the cavity 12.By supporting the electronic device 500 obliquely above the detection device 20 by the arm 46 of the stand 40, for example, the electronic device 500 may be positioned obliquely above the cavity 12. Even in this case, the orientation of the reference electrode 612 and the counter electrode 614 may be adjusted to allow at least a portion of the reference electrode 612 and at least a portion of the counter electrode 614 to be inserted into the cavity 12.

The details of the chip 200 will be described using FIGS. 3 to 5.

The chip 200 includes a substrate 210, a conductive material 220, and a resist 230.

The substrate 210 may be, for example, a glass substrate, a semiconductor substrate (for example, a silicon substrate), or a resin substrate.

The conductive material 220 is made of, for example, metal.

The conductive material 220 includes a first portion 220a, a second portion 220b, and a third portion 220c. The first portion 220a functions as the working electrode 222, and the second portion 220b functions as the terminal 224. The third portion 220c functions as the wiring 226, and electrically connects the first portion 220a and the second portion 220b to each other.

The resist 230 is made of, for example, an insulating material (for example, resin).

As shown in FIG. 3, the aperture 100a of the wiring substrate 100, the aperture 410a of the base material 410, and the aperture 420a of the base material 420 expose a part of the substrate 210 (a portion including the working electrode 222).

In the example shown in FIGS. 4 and 5, the resist 230 exposes a portion of the first portion 220a of the conductive material 220, exposes a portion of the second portion 220b of the conductive material 220, and covers the entirety of the third portion 220c of the conductive material 220. In particular, in the example shown in FIGS. 4 and 5, the resist 230 covers the substrate 210 and the conductive material 220, excluding a portion of the first portion 220a of the conductive material 220 and a portion of the second portion 220b of the conductive material 220. The resist 230 may expose the entirety of the first portion 220a and the entirety of the second portion 220b, or may cover only a portion of the third portion 220c.

The surface area of the portion of the working electrode 222 exposed from the resist 230 can be reduced and can be, for example, 200000 µm². As shown in FIG. 4, the shape of the portion of the working electrode 222 exposed from the resist 230 may be a circle, and the diameter of the circle may be, for example, 500 µm or less.

The details of the measurement device 10 will be described using FIG. 6.

In the example shown in FIG. 6, the measurement device 10 includes the working electrode 222, the reference electrode 612, the counter electrode 614, the electronic element 300, the electronic device 500, a measurement unit 810 (for example, a voltmeter), and a control unit 820 (for example, a function generator).

The electronic element 300 includes the current-voltage conversion circuit 310. In the example shown in FIG. 6, the current-voltage conversion circuit 310 includes the op amp 302 and the resistor 304. The resistor 304 is electrically connected between the output terminal and the inverted input terminal of the op amp 302, and functions as a feedback resistor. The non-inverted input terminal of the op amp 302 is grounded.

The current (redox current) flowing to the working electrode 222 is converted into a voltage by the current-voltage conversion circuit 310. The voltage output from the output terminal of the current-voltage conversion circuit 310 is measured by the measurement unit 810.

As described using FIGS. 1 to 5, in the present embodiment, the working electrode 222 is electrically connected to the current-voltage conversion circuit 310 via the wiring substrate 100. Thus, the physical distance from the working electrode 222 to the current-voltage conversion circuit 310 can be shortened. Therefore, in the electrical path from the working electrode 222 to the current-voltage conversion circuit 310, the influence of noise can be reduced. Thus, low-noise minute redox current can be detected.

The electronic device 500 includes the op amp 502, the op amp 504, the resistor 506, and the resistor 508. The counter electrode 614 is electrically connected to the output terminal of the op amp 502. The non-inverted input terminal of the op amp 502 is grounded. A voltage is input to the inverted input terminal of the op amp 502 from the control unit 820 via the resistor 508. The reference electrode 612 is connected to the inverted input terminal of the op amp 502 via the op amp 504 and the resistor 506. The op amp 504 functions as a voltage follower, the non-inverted input terminal of the op amp 504 is electrically connected to the reference electrode 612, and the inverted input terminal of the op amp 504 is electrically connected to the output terminal of the op amp 504.

Though the reference electrode 612 is electrically connected to the inverted input terminal of the op amp 502 via the op amp 504 in the example shown in FIG. 6, it may be electrically connected to the inverted input terminal of the op amp 502 without passing through the op amp 504.

As described using FIGS. 1 to 5, in the present embodiment, the reference electrode 612 is electrically connected to the op amp 502 via the holder 510. Thus, the physical distance from the reference electrode 612 to the op amp 502 can be shortened. Therefore, in the electrical path from the reference electrode 612 to the op amp 502, the influence of noise can be reduced. Further, in the present embodiment, the counter electrode 614 is electrically connected to the op amp 502 via the holder 510. Thus, the physical distance from the counter-electrode 614 to the op amp 502 can be shortened. Therefore, in the electrical path from the counter electrode 614 to the op amp 502, the influence of noise can be reduced. In this way, low-noise minute redox current can be detected.

The measurement device 10 can be used for measuring various redox currents. In one example, a solution containing nucleic acid is dropped into the cavity 12 of the measurement device 10 and the nucleic acid is secured to the working electrode 222, whereby a redox current (for example, cyclic voltammetry (CV)) may be measured. The nucleic acid can be, for example, DNA (deoxyribonucleic acid) or RNA (ribonucleic acid) (for example, microRNA (miRNA)).

Though the embodiments of the present invention have been described above with reference to the drawings, they are merely examples of the present invention, and various configurations other than those described above may be adopted.

This application claims priority based on Japanese Patent Application No. 2018-202568, filed on October 29, 2018, the disclosure of which is incorporated herein in its entirety.

### REFERENCE SIGNS LIST

- 10: Measurement Device
- 12: Cavity
- 20: Detection Device
- 30: Detection Device
- 40: Stand
- 42: Stage
- 44: Support Column
- 46: Arm
- 100: Wiring Substrate
- 100a: Aperture
- 102: First Surface
- 104: Second Surface
- 106a: First Side
- 106b: Second Side
- 106c: Third Side
- 106d: Fourth Side
- 112: First Terminal
- 114: Second Terminal
- 116: Wiring
- 200: Chip
- 210: Substrate
- 220: Conductive Material
- 220a: First Portion
- 220b: Second Portion
- 220c: Third Portion
- 222: Working Electrode
- 224: Terminal
- 226: Wiring
- 230: Resist
- 300: Electronic Element
- 302: Op Amp
- 304: Resister
- 310: Current-Voltage Conversion Circuit
- 312: Terminal
- 400: Fixing Member
- 410: Base material
- 410a: Aperture
- 412: First Region
- 414: Second Region
- 420: Base Material
- 420a: Aperture
- 430: Stopper
- 440: Connector
- 500: Electronic Device
- 502: Op Amp
- 504: Op Amp
- 506: Resister
- 508: Resister
- 510: Holder
- 512: Terminal
- 514: Terminal
- 612: Reference Electrode
- 614: Counter Electrode
- 810: Measurement Unit
- 820: Control Unit

## Claims

1. A detection device, comprising:
a wiring substrate having a first terminal and a second terminal electrically connected to the first terminal;
a chip having a working electrode and a terminal electrically connected to the working electrode; and
an electronic element having a current-voltage conversion circuit and a terminal electrically connected to the current-voltage conversion circuit, wherein
the chip overlaps with the wiring substrate,
the terminal of the chip is electrically connected to the first terminal of the wiring substrate,
the electronic element overlaps with the wiring substrate, and
the terminal of the electronic element is electrically connected to the second terminal of the wiring substrate.

2. The detection device according to claim 1, further comprising:
a base material having a first region having an aperture and a second region surrounding the first region, wherein
the wiring substrate has an aperture,
the wiring substrate is positioned on the second region of the base material so that the aperture of the wiring substrate overlaps with the aperture of the base material, and
the chip is positioned in the aperture of the base material.

3. The detection device according to claim 2, further comprising a connector which is positioned between the wiring substrate and the chip, and which electrically connects the first terminal of the wiring substrate and the terminal of the chip to each other.

4. The detection device according to any one of claims 1 to 3, wherein
the chip includes a conductive material having a first portion functioning as the working electrode, a second portion functioning as the terminal, and a third portion which electrically connects the first portion and the second portion,
the chip further includes a resist, and
the resist exposes at least a portion of the first portion of the conductive material and at least a portion of the second portion of the conductive material and covers at least a portion of the third portion of the conductive material.

5. A detection device, comprising:
a holder which holds an op amp;
a first terminal which projects from the holder and which is electrically connected to an inverted input terminal of the op amp; and
a reference electrode which is attached to the first terminal and which is electrically connected to the first terminal.

6. The detection device according to claim 5, further comprising:
a second terminal which projects from the holder and which is electrically connected to an output terminal of the op amp; and
a counter electrode which is attached to the second terminal and which is electrically connected to the second terminal.

7. A detection device, comprising:
a holder which holds an op amp;
a terminal which projects from the holder and which is electrically connected to an output terminal of the op amp; and
a counter electrode which is attached to the terminal and which is electrically connected to the terminal.
